# EUROPÄISCHE PATENTSCHRIFT

(11) **EP 1 199 492 B1**
(45) Veröffentlichungstag und Bekanntmachung des Hinweises auf die Patenterteilung: **01.12.2004**
(21) Anmeldenummer: 01123813.6
(22) Anmeldetag: 05.10.2001
(51) Int. Cl.: F16F 9/32, F16F 9/516, F16F 9/348

(54) **Arbeitskolben für einen hydraulischen Stossdämpfer**
Working piston for a hydraulic shock absorber
Piston de travail pour amortisseur de chocs hydraulique

(30) Priorität: 20.10.2000 DE 10051971
(43) Veröffentlichungstag der Anmeldung: 24.04.2002
(73) Patentinhaber: ThyssenKrupp Bilstein GmbH, 58256 Ennepetal (DE)
(72) Erfinder: Adamek, Jürgen, Dr.-Ing., 58256 Ennepetal (DE); Diederich, Manfred, Dipl.-Ing., 56769 Bereborn (DE); Gaillard, Axel, 58339 Breckerfeld (DE); Justinger, Heribert, 54427 Kell am See (DE); Mathony, Alfred, 54296 Trier (DE); Sasse, Thomas, Dipl.-Ing., 31737 Rinteln (DE); Satzek, Christian, Dipl.-Ing., 42107 Wuppertal (DE); Schwindling, Stefan, Dipl.-Ing., Kell am See (DE); Stichler, Bernd, Dipl.-Ing., 71642 Ludwigsburg (DE)

(56) Entgegenhaltungen:
- DE-A- 4 027 796
- DE-A- 19 808 698
- DE-C- 969 330
- DE-U- 9 103 740
- DE-U- 9 202 474
- DE-U- 29 623 140
- US-A- 4 121 704
- US-A- 4 830 152

## Beschreibung

Die Erfindung betrifft einen Arbeitskolben für einen hydraulischen Stoßdämpfer nach dem Oberbegriff des Anspruchs 1.

Stoßdämpfer für Kraftfahrzeuge, die dazu dienen, die Schwingungen der über Federn aufgehängten Räder zu dämpfen, sind üblicherweise mit am Ende einer in das Stoßdämpferrohr oszillierend eintauchenden Kolbenstange angebrachten Arbeitskolben versehen. Diese Arbeitskolben weisen häufig axiale Durchbrüche auf, die einenends über Rückschlagventile, vorzugsweise Federscheiben oder Federscheibenpakete, verschließbar sind.

Aus der DE-PS 969 330 ist ein derartiger Arbeitskolben bekannt. Zum Einstellen der Federvorspannung der als Rückschlagventil angeordneten Federscheiben bzw. Federscheibenpakete sind diese an einer Andrückvorrichtung befestigt. Durch Verdrehen der Andrückeinrichtung auf einem Gewinde kann die Vorspannung der Federscheiben bzw. Federscheibenpakete unterschiedlich eingestellt werden.

Der einstellbare Arbeitskolben, wie er in der DE-PS 969 330 beschrieben ist, ist äußerst bauaufwendig und muss darüber hinaus mit einer sehr hohen Genauigkeit hergestellt werden.

Aus der US-A-4,830,152 ist ein Arbeitskolben mit den Merkmalen des Oberbegriffs des Anspruchs 1 bekannt. Bei diesem Arbeitskolben sind zum Einstellen der Vorspannung der Federscheiben bzw. Federscheibenpakete Anlagescheiben mit einem zentralen Bund vorgesehen. Die Höhe dieses jeweiligen Bundes bestimmt die Vorspannung des Federscheibenpaketes. Die Vorspannung der Federscheibenpakete kann nur durch ein Auswechseln dieser Anlagescheiben erfolgen, wobei dann entweder Anlagescheiben mit einem Bund anderer Höhe eingesetzt werden oder die Höhe des Bundes durch Unterlegen von Zwischenscheiben verändert wird. Auch diese Einstellung der Federscheibenvorspannung ist sehr aufwändig.

Der Erfindung liegt die Aufgabe zugrunde, einen Arbeitskolben zu finden, der in einfacher Weise eine begrenzte Einstellung der speziell als Federscheiben oder Federscheibenpakete ausgebildeten Rückschlagventile zu ermöglichen. Dabei soll wie in der DE-PS 969 330 eine unabhängige Einstellbarkeit in der Zugstufe und in der Druckstufe möglich sein. Des Weiteren soll ein einfaches Verfahren zum Herstellen eines derar tigen Arbeitskolbens gefunden werden.

Die Aufgabe wird erfindungsgemäß durch die Merkmale des Anspruchs 1 gelöst. Vorteilhafte Aus- und Weiterbildungen sind in den Ansprüchen 2 bis 10 beschrieben.

Die mit der Erfindung erzielten Vorteile bestehen insbesondere darin, dass bei einem einfach ausgebildeten Arbeitskolben in einfacher Weise eine genaue Einjustierung des Strömungswiderstandes der Zugstufe und der Druckstufe ermöglicht wird. Damit kann in einfacher Weise die gesamte Fertigungstoleranz eines derartigen Arbeitskolbens ausgeglichen werden. Weiterhin ist die Einstellung der Kennwerte des Arbeitskolbens unabhängig für die Druckstufe und die Zugstufe in einfacher Weise möglich.

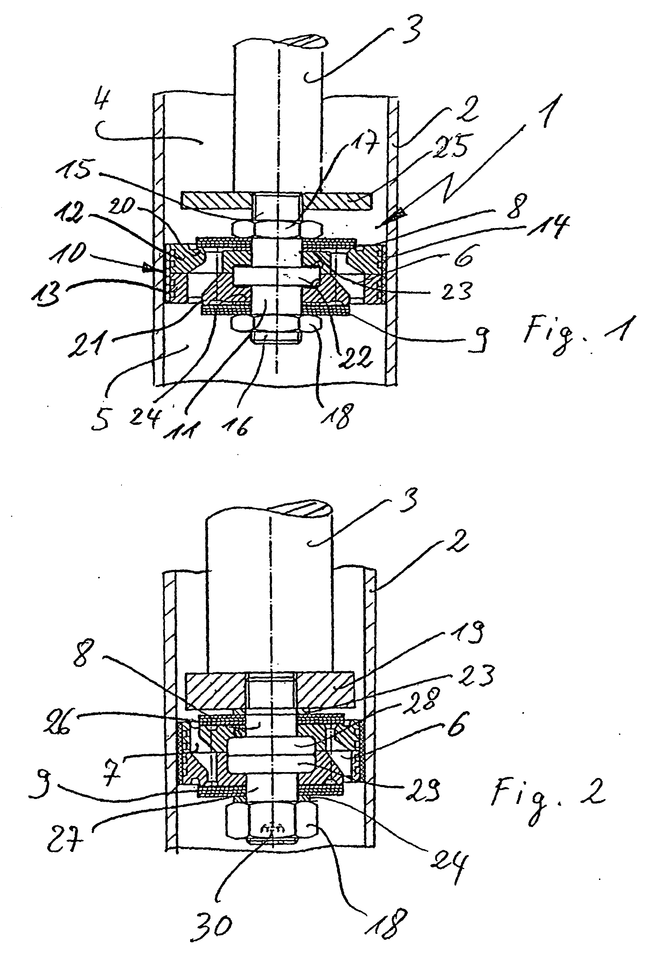

Ein Ausführungsbeispiel der Erfindung ist in der Zeichnung dargestellt und wird im Folgenden näher beschrieben. Die Figuren 1 bis 4 zeigen jeweils Schnitte durch den Arbeitskolben, der in unterschiedlicher Weise aufgebaut bzw. hergestellt ist.

Arbeitskolben 1 werden üblicherweise am in ein Stoßdämpferrohr 2 oszillierend eintauchenden Ende einer Kolbenstange 3 angeordnet. Die Verbindung mit der Kolbenstange 3 erfolgt üblicherweise durch Verschrauben. Andere Anbindungsmöglichkeiten sind jedoch auch üblich. Der in das Stoßdämpferrohr 2 eintauchende Arbeitskolben 1 teilt den mit Dämpfungsflüssigkeit gefüllten Raum des Stoßdämpferrohrs 2 in zwei Arbeitsräume 4, 5 auf. Der Arbeitskolben 1 weist unterschiedliche Durchströmkanäle 6, 7 auf, die jeweils an einem Ende durch Rückschlagventile verschließbar sind. Im Ausführungsbeispiel sind diese Rückschlagventile als Federscheibenpakete 8, 9 ausgebildet. Die Grundkörper 10 der Arbeitskolben 1 sind in den Ausführungsbeispielen dreiteilig, bestehend aus einem Bolzen 11 und zwei Kolbenhälften 12, 13, aufgebaut. Am Außenumfang der Arbeitskolben 1 sind Bandagen 14 aus einem gleitfähigen Material in der Form eines Folienschlauches aufgebracht. Die Bolzen 11 sind an beiden Seiten mit einem Gewinde 15, 16 versehen. Beidseitig angeordnete Muttern 17, 18 bzw. Scheiben 19 dienen zum Zusammenschrauben der Einzelteile der Arbeitskolben 1. Die Federscheibenpakete 8, 9 liegen zentral direkt auf dem Grundkörper 10, also auf der jeweiligen Kolbenhälfte 12, 13, auf. Durch entsprechendes Anziehen der Muttern 17, 18 bzw. des Bolzens 11 in die Scheibe 19 können die Federscheibenpakete 8, 9 derartig mit dem Grundkörper 10 verspannt werden, dass sich der Grundkörper, also die jeweiligen Kolbenhälften 12, 13, unter dem jeweiligen Federscheibenpaket 8, 9 elastisch oder sogar plastisch axial verformen. Das bedingt, dass die Federscheibenpakete 8, 9 mehr oder minder stark mit ihrem Außenrand auf einer außen umlaufenden kreisförmigen Dichtungskante 20, 21 des Grundkörpers 10 aufliegen. Es hat weiterhin zur Folge, dass die Federscheibenpakete 8, 9 in ihrer Vorspannung variierbar sind.

Der Arbeitskolben gemäß Fig. 1 weist einen Bolzen 11 auf, der bereits ursprünglich mit einem umlaufenden Kragen 22 versehen ist. Der Kragen 22 liegt in Ausnehmungen der Kolbenhälften 12, 13 und wird somit von diesen nicht nur axial, sondern auch radial umschlossen. Eventuelle Fertigungstoleranzen oder bewusst vorgesehenes Spiel zwischen dem Kragen 22 und den Kolbenhälften 12, 13 wird durch Einbringen einer aushärtbaren Gießmasse ausgeglichen, sodass insbesondere axial eine feste Verbindung zwischen Kolbenhälften 12, 13 und Kragen 22 des Bolzens 11 erzielt wird. Die Auflagefläche zwischen den Federscheibenpaketen 8, 9 wird durch das Unterlegen von Druckscheiben 23, 24 derartig bestimmt, dass die gewünschte elastische oder auch plastische Eindrückung über die vorgegebenen Schraubenkräfte erzielt werden kann.

Der Bolzen 11 wird mit seinem oberen Gewinde 15 in eine Prallscheibe 25 eingeschweißt. Damit erfolgt die Verbindung zwischen Arbeitskolben 1 und Kolbenstange 3. Danach kann über die Verdrehung der Muttern 17, 18 die Einstellung der Federscheibenpakete 8, 9 für die Druckstufe bzw. für die Zugstufe unabhängig voneinander erfolgen.

Bei der Ausbildung des Arbeitskolbens gemäß Fig. 2 wird der Bolzen 11 aus zwei Bolzenhälften 26, 27 gebildet, die ursprünglich jeweils einen Kopf 28, 29 aufweisen. Die beiden Bolzenhälften 26, 27 werden mit ihren Köpfen aneinander gelegt und beispielsweise miteinander verschweißt, wodurch sich der Kragen 22 bildet. Die weitere Anbindung der Kolbenhälften 12, 13 kann dann, wie bereits zu Fig. 1 erläutert, erfolgen. Es ist jedoch auch möglich, dass die Köpfe 28, 29 der Bolzenhälften 26, 27 nur aneinander gelegt werden und mit den Kolbenhälften 12, 13 untereinander und mit diesen über einen aushärtbaren Kleber verbunden werden. Die Anbindung des Arbeitskolbens 1 an die Kolbenstange 3 erfolgt in Fig. 2 entsprechend der Anbindung in Fig. 1, jedoch dient in Fig. 2 die als Prallscheibe ausgebildete Scheibe 19 gleichzeitig zum Verspannen des oberen Federscheibenpakets 8. Das Einschrauben und Verspannen erfolgt hier mittels Anziehen über einen Innensechskant 30. Sobald das obere Federscheibenpaket die richtige Vorspannung aufweist, erfolgt das Verspannen und Einrichten des unteren Federscheibenpaketes 9. Dieses erfolgt wie auch in Fig. 1 über eine Mutter 18.

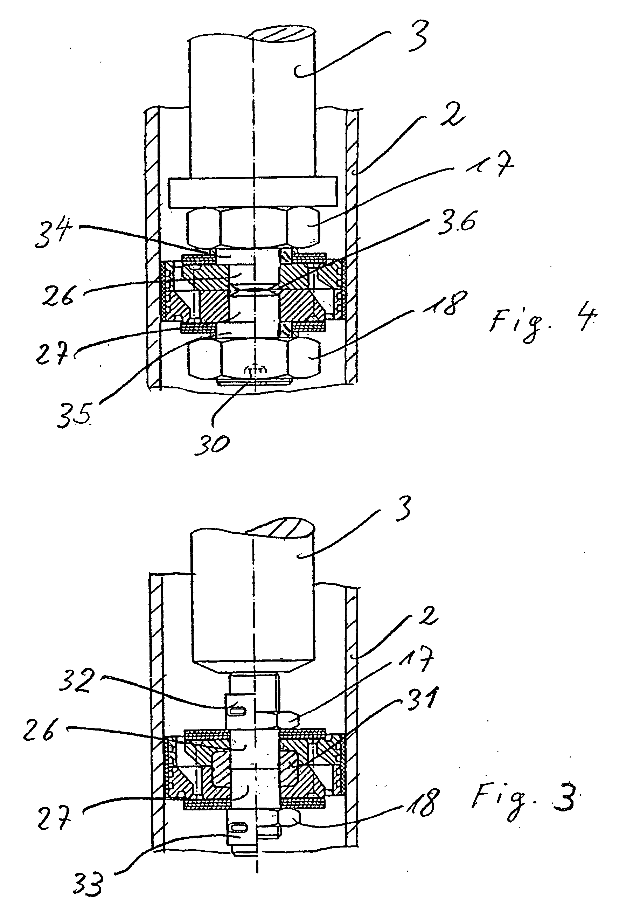

Bei der Ausbildung gemäß Fig. 3 weisen die Kolbenhälften 12, 13 zentral innen an den aneinander liegenden Stirnflächen Ausnehmungen 31 auf. Auch hier sind die Bolzenhälften 26, 27, zumindest im Bereich des Grundkörpers 10, zylindrisch ausgebildet. Der Grundkörper 10 wird derartig hergestellt, dass die Bolzenhälften 26, 27 beispielsweise durch Abbrennstumpfschweißen miteinander verbunden werden. Dabei entsteht eine nach außen gerichtete Schweißwulst, die die Ausnehmungen 31 ausfüllt. Die Dimensionen von Bolzenhälften 26, 27 und Ausnehmungen 31 in den Kolbenhälften 12, 13 sind so aufeinander abgestimmt, dass die Schweißwulst nach dem Verschweißen der Bolzenhälften 26, 27 miteinander die Ausnehmungen 31 im Wesentlichen ausfüllen. Das Verspannen der Federscheibenpakete 8, 9 erfolgt alternativ mittels Klemmverbindungen 32, 33, Schweißverbindungen oder mittels Muttern 17, 18.

Zur besseren Ausrichtung und Fixierung der Kolbenhälften 12, 13 gegenüber dem Kragen 22 bzw. den Köpfen 28, 29 können die Stirnflächen der Ausnehmungen 31 der Kolbenhälften 12, 13 mit schneidenartigen Vorsprüngen ausgebildet werden. Diese schneidenartigen Vorsprünge können kreisförmig und/oder radial verlaufend angeordnet sein. Dadurch wird erreicht, dass die Stirnflächen mit ihren Schneiden sich in den Kragen 22 bzw. die Köpfe 28, 29 eingraben. Bei geeigneter Führung der Kolbenhälften 12, 13 gegenüber der Kolbenstange 3 bzw. dem Bolzen 11 oder den Bolzenhälften 26, 27 ist dann eine einwandfreie Lage sowohl axial als auch radial gewährleistet. Diese einwandfreie Lage wird auch nicht durch die weiteren Verbindungsarbeitsgänge verändert.

Bei der Ausbildung gemäß Fig. 4 sind zwei verschiedene Verbindungsarten zwischen Kolbenhälften 12, 13 und Bolzen 11 dargestellt. Bei beiden gezeigten Versionen ist der Bolzen aus zwei Bolzenhälften 26, 27 gebildet, die innerhalb der Kolbenhälften 12, 13 miteinander verschweißt werden. Bei der in der linken Hälfte gezeigten Version sind die Bolzenhälften 26, 27 mit einem Bund 34, 35 ausgebildet, der nach dem Verbinden der Bolzenhälften 26, 27 außen auf den Stirnflächen der Kolbenhälften 12, 13 aufliegen. Damit sind alle Bauteile des Grundkörpers 10 fest miteinander verbunden.

Bei der in der rechten Hälfte von Fig. 4 gezeigten Ausbildung weisen die Kolbenhälften 12, 13 an den aneinander liegenden Stirnflächen jeweils nach innen ragende Nasen 36 auf. Nach dem Verschweißen der Bolzenhälften 26, 27, die bei dieser Ausbildung im Grundkörperbereich zylindrisch sind, ergibt sich wiederum eine feste Verbindung des gesamten Grundkörpers 10.

### Bezugszeichenliste

- 1.: Arbeitskolben
- 2.: Stoßdämpferrohr
- 3.: Kolbenstange
- 4.: Arbeitsraum
- 5.: Arbeitsraum
- 6.: Durchströmkanal
- 7.: Durchströmkanal
- 8.: Federscheibenpaket
- 9.: Federscheibenpaket
- 10.: Grundkörper
- 11.: Bolzen
- 12.: Kolbenhälfte
- 13.: Kolbenhälfte
- 14.: Bandage
- 15.: Gewinde
- 16.: Gewinde
- 17.: Mutter
- 18.: Mutter
- 19.: Scheibe
- 20.: Dichtungskante
- 21.: Dichtungskante
- 22.: Kragen
- 23.: Druckscheibe
- 24.: Druckscheibe
- 25.: Prallscheibe
- 26.: Bolzenhälfte
- 27.: Bolzenhälfte
- 28.: Kopf
- 29.: Kopf
- 30.: Innensechskant
- 31.: Ausnehmungen
- 32.: Klemmverbindung
- 33.: Klemmverbindung
- 34.: Bund
- 35.: Bund
- 36.: Nase

## Patentansprüche

1. Arbeitskolben (1) für einen hydraulischen Stoßdämpfer, der am Ende einer in ein mit Dämpfungsflüssigkeit gefülltes Stoßdämpferrohr (2) oszillierend eintauchenden Kolbenstange (3) angeordnet ist und dieses in zwei Arbeitsräume (4, 5) trennt und der einen Grundkörper (10) mit axialen Durchströmkanälen (6, 7) aufweist, welche jeweils einenends über aus Federscheiben aufgebauten Rückschlagventilen verschließbar sind, wobei die Vorspannung der Federscheiben oder Federscheibenpakete (8, 9) für die Druck- und Zugstufe unabhängig voneinander mittels Andrückvorrichtungen einstellbar ist, **dadurch gekennzeichnet, dass** die Federscheiben oder Federscheibenpakete (8, 9) direkt zentral auf dem Grundkörper (10) aufliegen und die Einstellung der Vorspannung durch elastisches und/oder plastischer Verformen des Grundkörpers (10) an der Auflagefläche erfolgt.

2. Arbeitskolben nach Anspruch 1, **dadurch gekennzeichnet, dass** der Grundkörper (10) mehrteilig ausgebildet ist.

3. Arbeitskolben nach Anspruch 2, **dadurch gekennzeichnet, dass** der Grundkörper (10) aus einem zentralen Bolzen (11) mit einem umlaufenden Kragen (22) und zwei beidseitig axial an den Kragen sich anschließende, diesen umschließenden Kolbenhälften (12, 13) besteht.

4. Arbeitskolben nach Anspruch 2, **dadurch gekennzeichnet, dass** der Grundkörper (10) aus einem zentralen Bolzen (11) mit zwei axial voneinander getrennten umlaufenden Bunden (34, 35) bestehen, zwischen denen axial Kolbenhälften (12, 13) liegen.

5. Arbeitskolben nach Anspruch 2, **dadurch gekennzeichnet, dass** der Grundkörper (10) aus einem zentralen Bolzen (11) mit einer umlaufenden Nut ausgebildet ist, der von zwei Kolbenhälften (12, 13) umschlossen ist, die mit Nasen (36) in die Nut eingreifen.

6. Arbeitskolben nach einem der Ansprüche 3 bis 5, **dadurch gekennzeichnet, dass** die Kolbenhälften (12, 13) aus Sintermetall bestehen.

7. Arbeitskolben nach einem oder mehreren der Ansprüche 1 bis 6, **dadurch gekennzeichnet, dass** die Andrückvorrichtungen als Schraubvorrichtung, bestehend aus Mutter (17, 18) und Außengewinde (15, 16) auf dem Bolzen (11), ausgebildet sind.

8. Arbeitskolben nach einem oder mehreren der Ansprüche 1 bis 7, **dadurch gekennzeichnet, dass** die Mantelfläche des Kragens (22) oder der Köpfe (28, 29) unrund, vorzugsweise polygon ausgebildet ist und in entsprechend ausgebildete Ausnehmungen der Kolbenhälften (12,13) fasst.

9. Arbeitskolben nach einem oder mehreren der Ansprüche 1 bis 8, **dadurch gekennzeichnet, dass** an den Stirnflächen der Ausnehmungen (31) der Kolbenhälften (12, 13) kreisförmige und/oder radial verlaufende, vorzugsweise schneidenartige Vorsprünge angeordnet sind.

10. Arbeitskolben nach einem oder mehreren der Ansprüche 1 bis 9, **dadurch gekennzeichnet, dass** die Kolbenhälften (12, 13) an ihren aneinander liegenden Stirnflächen ineinander greifende Vorsprünge und Rücksprünge aufweisen.

## Claims

1. Working piston (1) for a hydraulic shock absorber, which is disposed at the end of a piston rod (3) immersed in an oscillating manner in a shock absorber pipe (2) filled with damping fluid, and which separates this shock absorber pipe into two working chambers (4, 5) and which has a basic body (10) with axial through-flow ducts (6, 7) which can each be closed at one end by means of non-return valves constructed from spring plates, wherein the pretensioning of the spring plates or spring plate packets (8, 9) can be adjusted for the compression and traction stage independently of each other by means of pressing devices, **characterised in that** the spring plates or spring plate packets (8, 9) lie directly on the centre of the basic body (10) and the pretensioning is adjusted by elastic and/or plastic deformation of the basic body (10) at the contact surface.

2. Working piston as claimed in claim 1, **characterised in that** the basic body (10) is formed from a plurality of parts.

3. Working piston as claimed in claim 2, **characterised in that** the basic body (10) consists of a central shaft (11) having a circumferential collar (22) and two piston halves (12, 13) which adjoin the collar axially on both sides and surround it.

4. Working piston as claimed in claim 2, **characterised in that** the basic body (10) consists of a central shaft (11) having two circumferential shoulders (34, 35) which are axially separated from each other and between which axial piston halves (12, 13) are located.

5. Working piston as claimed in claim 2, **characterised in that** the basic body (10) is formed from a central shaft (11) having a circumferential groove, which shaft is surrounded by two piston halves (12, 13) which engage into the groove with lugs (36).

6. Working piston as claimed in any one of claims 3 to 5, **characterised in that** the piston halves (12, 13) consist of sintered metal.

7. Working piston as claimed in any one or several of claims 1 to 6, **characterised in that** the pressing devices are formed as a screw device consisting of a nut (17, 18) and outer thread (15, 16) on the shaft (11).

8. Working piston as claimed in any one or several of claims 1 to 7, **characterised in that** the outer surface of the collar (22) or of the heads (28, 29) is formed in an non-round, preferably polygonal manner and engages into correspondingly formed recesses in the piston halves (12, 13).

9. Working piston as claimed in any one or several of claims 1 to 8, **characterised in that** circular and/or radially extending, preferably blade-like projections are disposed on the end faces of the recesses (31) in the piston halves (12, 13).

10. Working piston as claimed in any one or several of claims 1 to 9, **characterised in that** the piston halves (12, 13) have mutually engaging projections and recesses on their end faces which lie against each other.

## Revendications

1. Piston de travail (1) pour un amortisseur hydraulique, qui est disposé à l'extrémité d'une tige de piston (3) qui s'enfonce de manière oscillante dans un tube d'amortisseur (2) rempli d'un liquide d'amortissement, qui sépare ce dernier en deux espaces de travail (4, 5) et qui présente un corps de base (10) doté de canaux axiaux de passage (6, 7) qui peuvent tous être fermés à une extrémité par l'intermédiaire de soupapes anti-retour constituées de rondelles de ressort, la précontrainte des rondelles de ressort ou du paquet de rondelles de ressort (8, 9) pouvant être réglée indépendamment pour l'étage de compression et l'étage de traction au moyen de dispositifs de poussée, **caractérisé en ce que** les rondelles de ressort ou les paquets (8, 9) de rondelles de ressort sont appliqués directement sur le centre du corps de base (10), et **en ce que** le réglage de la précontrainte s'effectue par déformation élastique et/ou plastique du corps de base (10) contre la surface d'appui.

2. Piston de travail selon la revendication 1, **caractérisé en ce que** le corps de base (10) est réalisé en plusieurs pièces.

3. Piston de travail selon la revendication 2, **caractérisé en ce que** le corps de base (10) est constitué d'un tourillon central (11) doté d'un collet périphérique (22) et de deux moitiés de piston (12, 13) qui se raccordent aux deux côtés du collet et qui entourent ce dernier dans le sens axial.

4. Piston de travail selon la revendication 2, **caractérisé en ce que** le corps de base (10) est constitué d'un tourillon central (11) doté de deux épaulements (34, 35) périphériques, séparés axialement l'un de l'autre et entre lesquels des moitiés de piston (12, 13) sont disposées axialement.

5. Piston de travail selon la revendication 2, **caractérisé en ce que** le corps de base (10) est constitué d'un tourillon central (11) doté d'une rainure périphérique qui est entourée par deux moitiés de piston (12, 13) qui s'engagent dans la rainure par des becs (36).

6. Piston de travail selon l'une des revendications 3 à 5, **caractérisé en ce que** les moitiés de piston (12, 13) sont réalisées en métal fritté.

7. Piston de travail selon l'une ou plusieurs des revendications 1 à 6, **caractérisé en ce que** les dispositifs de poussée sont configurés comme dispositifs filetés constitués d'un écrou (17, 18) et d'un filet extérieur (15, 16) ménagé sur le tourillon (11).

8. Piston de travail selon l'une ou plusieurs des revendications 1 à 7, **caractérisé en ce que** la surface d'enveloppe du collet (22) ou des têtes (28, 29) a une configuration non circulaire et de préférence polygonale, et est reprise dans des découpes de configuration appropriée des moitiés de piston (12, 13).

9. Piston de travail selon l'une ou plusieurs des revendications 1 à 8, **caractérisé en ce que** des saillies de forme circulaire et/ou qui s'étendent radialement, de préférence en forme de lames, sont disposées sur les surfaces frontales des découpes (31) des moitiés de piston (12, 13).

10. Piston de travail selon l'une ou plusieurs des revendications 1 à 9, **caractérisé en ce que** sur leurs surfaces frontales situées l'une contre l'autre, les moitiés de piston (12, 13) présentent des saillies et des retraits qui s'engagent les unes dans les autres.
